# EUROPEAN PATENT SPECIFICATION

(11) **EP 1 260 741 B1**
(45) Date of publication and mention of the grant of the patent: **31.05.2006**
(21) Application number: 02425331.2
(22) Date of filing: 23.05.2002
(51) Int. Cl.: F16J 15/34, F16L 13/14

(54) **O-ring for press-fitting**
O-Ring für eine Pressverbindung
Joint torique pour raccord à sertir

(30) Priority: 24.05.2001 IT MI20011103
(43) Date of publication of application: 27.11.2002
(73) Proprietor: Raccorderie Metalliche S.p.A., 46010 Campitello di Marcaria, Mantova (IT)
(72) Inventor: Miozzo, Luigi, 46030 Cappelletta, MN (IT)
(74) Representative: Adorno, Silvano

(56) References cited:
- EP-A- 0 870 964
- FR-A- 1 438 393
- US-A- 2 360 735
- US-A- 2 420 104

## Description

The present invention relates to an O-ring for a press-fitting.

It is known that press-fittings are used in practice for connecting tubes to each other permanently. For this purpose it is not only necessary that the tubes to be connected are firmly attached together through the press-fitting, but also that the tightness is ensured, so that there are no losses of the fluids conveyed through the connected tubes. Therefore, in practice it is known that a gasket (O-ring) is always provided at the ends of the press-fitting which are useful as openings for inserting the tubes to be connected. For this purpose, the press-fittings known in practice are provided with a round bulge, having an hook-shaped profile, whose inner space forms a housing for said O-ring.

EP 0 870 964 in the name of the same applicant discloses a press-fitting in which said bulge has the profile of a substantially isosceles triangle instead of that of a hook. This substantially isosceles profile of the bulge confers numerous advantages to the press-fitting, the main of which consists in the possibility of reducing the pressing space with respect to the fittings according to the prior art, and to use simplified pressing means.

The O-ring inserted into the housing is, according to the prior art, of the type having circular cross-section, and is preferably made of an elastic material, for example caoutchouc. During the pressing of the fitting, said bulge is squashed and its profile takes on a substantially trapezoidal shape. Also the O-ring is deformed in a corresponding way, being squashed between the inner walls of the housing and the outer wall of the tube inserted in the press-fitting. In this way, the O-ring tends to occupy most of the inner space of the housing, so that if the press-fitting has no faults or imperfections, the fitting is water-tight.

However, in some cases the junctions carried out by using an O-ring with circular cross-section in a press-fitting of the above mentioned type do not assure a suitable tightness, and losses of the fluids conveyed through the tubes connected by the press-fitting could occur. In particular, these losses can occur if the housing inner surface or the outer surface of the tube inserted in the fitting are not completely smooth, but have imperfections or faults.

On the other hand, all previous attempts made to improve the tightness of the press-fitting have brought no results because, by modifying the shape or the dimension of the O-ring it is easy to incur in a further inconvenience, that is the risk to pinch the O-ring during the pressing step of the fitting.

Object of the present invention is therefore to provide an O-ring which, inserted into the housing of a press-fitting, is capable of ensuring a perfect tightness even in presence of imperfections or surface faults of the surface of the same press-fitting or of the tube inserted therein. Said object is achieved through an O-ring whose main features are specified in the first claim and other features are specified in the following claims.

An O-ring with a substantially isoscele trapezoidal cross-section is known from US-2360735

Thanks to its peculiar shape, the O-ring according to the present invention has a cross-section of larger area bigger with respect to those of the O-rings of traditional type which can be inserted in the same housing of a press-fitting. Therefore, it fills said housing almost integrally, and even if it does not cause any problems during pressing of the fitting, it has a higher pressing factor than that of traditional O-rings, with consequent improvement of the tightness and duration of the junction of the junction in the time.

Further advantages and features of the O-ring according to the present invention will become evident to those skilled in the art from the following detailed description of some embodiments thereof with reference to the accompanying drawings, wherein:
- figure 1 shows a partial longitudinal sectional view of a press-fitting provided with an O-ring according to an embodiment of the invention; e
- figure 2 shows an enlarged cross-sectional view of the O-ring according to a preferred embodiment of the invention.

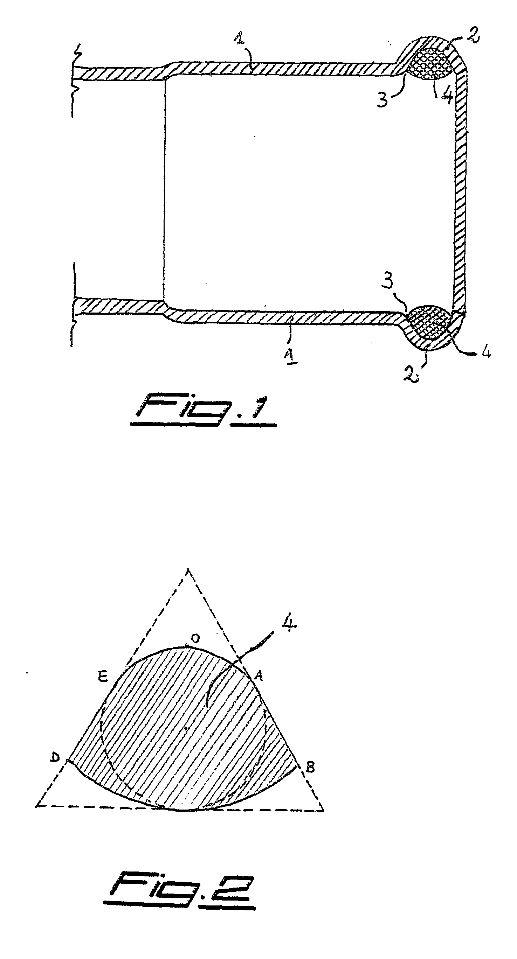

Referring to figure 1, there is shown that a press-fitting 1 of the type described in EP 0 870 964 in the name of the same applicant has a bulge 2 having substantially the profile of an isosceles triangle. The space inside bulge 2 forms, in a known way, a housing 3 for an O-ring.

According to the invention, an O-ring of particular shape is inserted into housing 3. In fact, the cross-section thereof has substantially the shape of an isosceles trapezoid with convex bases. In other words, the shape of the cross-section of O-ring 4 can be obtained from an isosceles triangle by cutting out the angles with two opposite arches of circle, one of which has a radius that is twice the other, as better illustrated in the following.

In this way, O-ring 4 has a cross-section of increased area with respect to a traditional O-ring that can be inserted in the same housing 3. Consequently, also the pressing factor of the O-ring and its tightness in press-fittings of the type described in EP 0 870 964 are higher than the ones obtainable with traditional O-rings having a circular cross-section. In particular, the O-ring according to the present invention assures the press-fitting tightness even in the presence of imperfections of the surface of the tube to be connected or of the O-ring inner surface.

According to a preferred embodiment of the invention, shown in figure 2, the cross-section of O-ring 4 has the shape of a geometric figure enclosed between segments AB and DE of the two sides of an isosceles triangle with a vertex angle within the range of 55° and 65°, an arch AE of a circumference having radius r inscribed in said isosceles triangle, and an arch BD having radius 2r centered on the middle point O of the arch AE, where A and E are the tangent points on triangle's sides of the inscribed circumference, and B and D are the intersection points with the arch of radius 2r. Preferably, said isosceles triangle has a vertex angle of 60° and is therefore an equilateral triangle.

Once inserted in the housing of a press-fitting, the O-ring 4 according to this embodiment of the invention fills it almost integrally. In fact, the area of its section is 20% larger than that of an O-ring having a circular section which could have been inserted into the same housing 3. Moreover, it has been experimentally proved that the pressing factor of this O-ring is 15% higher than the one of a traditional O-ring having a circular cross-section. Hence, the tightness of the press-fitting equipped with the O-ring according to this embodiment of the invention is highest.

For manufacturing the O-ring according to the present invention it is possible to use any known material considered suitable to manufacture O-rings of conventional type, for example caoutchouc in different mixings.

## Claims

1. An O-ring (4) whose cross-section has substantially the shape of an isosceles trapezoid with convex bases, **characterized in that** said cross-section has substantially the shape of a geometric figure delimited and enclosed between two segments (AB, DE) of the equal sides of an isosceles triangle with vertex angle within the range of 55° and 65°, an arc (AE) of the circle inscribed in said isosceles triangle having radius r and an arc (BD) of a circle having radius 2r centered on the middle point (O) of the said arch (AE) of the circle inscribed in said isosceles triangle.

2. An O-ring (4) according to claim 1, **characterized in that** said isosceles triangle is an equilateral triangle.

3. An O-ring (4) according to claim 1 or 2, **characterized in that** it is made of caoutchouc.

## Patentansprüche

1. O-Ring (4), dessen Querschnitt im Wesentlichen die Form eines gleichschenkligen Trapezoids mit konvexen Grundlinien aufweist, **dadurch gekennzeichnet, dass** der Querschnitt im Wesentlichen die Form einer geometrischen Figur hat, die zwischen zwei Segmenten (AB, DE) der gleichen Seiten eines gleichschenkligen Dreiecks mit einem Scheitelwinkel im Bereich von 55 ° und 65 °, einem Bogen (AE) des Inkreises des gleichschenkligen Dreiecks mit einem Radius r und einem Bogen (BD) eines Kreises mit Radius 2r, dessen Mittelpunkt auf dem mittleren Punkt (O) des Bogens (AE) des Inkreises des gleichschenkligen Dreiecks liegt, begrenzt und eingeschlossen ist.

2. O-Ring (4) nach Anspruch 1, **dadurch gekennzeichnet, dass** das gleichschenklige Dreieck ein gleichseitiges Dreieck ist.

3. O-Ring (4) nach Anspruch 1 oder 2, **dadurch gekennzeichnet, dass** er aus Kautschuk gefertigt ist.

## Revendications

1. Joint torique (4) dont la section transversale a sensiblement la forme d'un trapèze isocèle ayant des bases convexes, **caractérisé en ce que** ladite section transversale a sensiblement la forme d'une figure géométrique délimitée et incluse entre deux segments (AB, DE) des côtés égaux d'un triangle isocèle ayant un angle au sommet dans la plage de 55° à 65°, un arc (AE) du cercle inscrit dans ledit triangle isocèle ayant un rayon r, et un arc (BD) d'un cercle ayant un rayon 2r centré sur le point médian (O) dudit arc (AE) du cercle inscrit dans ledit triangle isocèle.

2. Joint torique (4) selon la revendication 1, **caractérisé en ce que** ledit triangle isocèle est un triangle équilatéral.

3. Joint torique (4) selon la revendication 1 ou 2, **caractérisé en ce qu'**il est constitué de caoutchouc.
